# EUROPEAN PATENT SPECIFICATION

(11) **EP 2 289 729 B1**
(45) Date of publication and mention of the grant of the patent: **13.02.2013**
(21) Application number: 10174978.6
(22) Date of filing: 01.09.2010
(51) Int. Cl.: B60K 15/03, F17C 7/02, F17C 13/02, G01F 23/24, G01F 23/26, F02M 37/00

(54) **Fuel level sensing device**
Füllstandsmessvorrichtung
Dispositif de détection de niveau de carburant

(30) Priority: 01.09.2009 GB 0915124; 22.09.2009 GB 0916656
(43) Date of publication of application: 02.03.2011
(73) Proprietor: Vectra Limited, Richmond Surrey TW9 1SE (GB); McConochie, David, St Paul's Court London W14 9YA (GB)
(72) Inventor: Vink, Herman, 5131 ZH, Alphen NB (NL); McConochie, David, Harlow, Essex CM17 0RB (GB)
(74) Representative: Giles, Ashley Simon

(56) References cited:
- EP-A2- 0 922 851
- EP-A2- 1 249 596

## Description

The present invention relates to a device for sensing the level of fuel in a tank. Preferred embodiments are suitable for sensing the level of LPG (liquefied petroleum gas) in an LPG tank.

Existing tanks and sensing arrangements often rely on mechanical parts to provide level indication, for example by means of a floating element and a system of gears. The floating element can jam giving either or both a false level reading and the inability to fill the tank. Furthermore, floats have been known to sink or fall off.

LPG tanks have a predetermined maximum fill level of 80% to prevent overfilling. There are concerns regarding the safety of filling an LPG tank beyond this maximum. However, using mechanical parts to provide level indication frequently leads to fillings of 90% or more, with subsequent safety issues.

Using a float also affects the ability to gauge low fuel levels. The size or volume of the float itself actually limits low level gauging. Sufficient volume of liquid is required to provide enough lift for the float to operate, and when the liquid falls below this level the float sinks on the bottom due to a lack of buoyancy and gives a false empty reading. A false empty reading is a particular problem in LPG tanks since it can cause a Bi Fuel vehicle to switch to a second fuel source unnecessarily.

European patent publication EP1249596A2 discloses a tank for an LPG injection system for internal combustion engines in which an electrically operated pump is fixed to the bottom of the tank structure and which in turn carries the structure of a level-sensing device of capacitive type.

The present invention provide a multivalve for mounting to a fuel tank, the multivalve having a feed valve operable to feed fuel out of the tank and a fuel level sensing device, the fuel level sensing device comprising a liquid level sensor that is situated in the tank when in use and is operable to make level measurements based on capacitance, the fuel level sensing device also including a separate maximum fill sensor being situated in the tank when in use and being operable to sense that a predetermined maximum fill level has been reached based on measurements of capacitance, wherein the position of each part of the fuel level sensing device is independent of the liquid level in the tank.

Advantageously, sensing the liquid level based on capacitance using a sensor in which each part is positioned independently of the liquid level in the tank means that the problems associated with moving and floating parts can be avoided. A maximum fill sensor provided separately from the liquid level sensor improves reliability of the device, for example, by allowing the designer to optimise the design of each sensor independently.

Preferably, the maximum fill sensor comprises a liquid detecting part and associated control circuitry and each part of the maximum fill sensor is also independent of the liquid level in the tank. The liquid detecting part could be a capacitor, and it may be that the capacitor plates are not solely dedicated to maximum fill sensing, but that they are, for example, structural components of another part of the device, such as a face of a body or housing part of the device. The maximum fill sensor can be comprised exclusively of parts whose positions do not depend on the liquid level in the tank, so that reliability issues associated with moving and floating parts can be avoided.

Optionally, the liquid level sensor comprises an elongate level probe and associated control circuitry. An elongate level probe can extend into the tank so that accurate low-level sensing is achieved. Since no moving parts are required, the level probe can extend right to the bottom of the tank in order that accurate level sensing is achieved right down to very low levels. In some embodiments it may be necessary to provide a small amount of isolation between the tank and the elongate level probe.

In preferred embodiments, the elongate level probe comprises two elongate electrodes, preferably concentric conducting tubes, between which electrodes liquid penetrates as the tank is filled. The concentric conducting tubes form two electrodes of a capacitor.

The maximum fill sensor is operable to sense that a predetermined maximum fill level has been reached. The device preferably also includes a fill shut-off mechanism which switches off a pilot valve when it is determined that the maximum fill level has been reached. When the maximum fill sensor determines that the predetermined maximum fill level has been reached, a signal may be sent to the fill shut-off mechanism which switches off a pilot valve. A pilot valve could be any secondary valve that can be switched off by the fill shut-off mechanism. Advantageously, using a pilot valve can be more reliable than directly operating a main fill valve. In preferred embodiments, the fill shut-off mechanism also includes a main valve, and the pilot valve is switched on to fill the tank, moving in one direction to relieve back pressure and allow the main valve to open; and when the pilot valve is switched off it moves in the opposite direction to cause back pressure to shut the main valve. Using a pilot valve in this way to control back pressure on a main valve is a simple and reliable way of shutting off the flow of fuel into the tank when the predetermined maximum fill level is reached.

As well as the pilot valve and the main valve, there may also be an electrical switch and a non-return valve having a movable triggering portion, in which the triggering portion is operable, when an incoming flow of fuel against the non-return valve reaches a sufficient level, to move towards and trigger an electrical switch, and the electrical switch is operable, when triggered, to switch on the pilot valve. The electrical switch could be, for example, a reed switch. Advantageously, the triggering portion must be physically moved to switch on the pilot valve and allow the tank to fill. This has advantages in terms of reliability, insofar as the pilot valve will not be erroneously switched on. The non-return valve may be designed such that whilst there is a sufficient incoming flow of fuel, the triggering portion triggers and holds the electrical switch in a state which switches on the pilot valve and keeps the pilot valve switched on. When the incoming flow of fuel against the non-return valve drops from a sufficient level to a level below the sufficient level, the triggering portion moves away from the electrical switch, and the switch switches to a state in which the pilot valve is switched off. The pilot valve may be switched off as a result of the maximum fill sensor sensing that the predetermined maximum fill level has been reached, which would in turn cause the main valve to close and the non-return valve to close. Alternatively, the electrical switch may only briefly close in order to power up the electronics, at which point control passes to a microcontroller forming part of the control circuitry which also controls supply voltage.

Preferably, the maximum fill sensor is operable to sense that the maximum fill level has been reached based on measurements of capacitance. The provision of two separate sensors, both of which are based on a measure of capacitance, provides a highly reliable fuel sensing device in which sensing is not reliant on movable parts.

Preferred features of the present invention will now be described, purely by way of example, with reference to the accompanying drawings, in which:-
Figure 1 is a cross-sectional diagram of a fuel level sensing device;
Figure 2 is a diagram of the exterior of a multivalve embodying the present invention;
Figure 3 is a simplified circuit diagram illustrating operating principles of embodiments of the present invention;
Figure 4 is a simplified hydraulic and electric diagram of devices embodying the present invention.
Figure 5 is a cross-sectional diagram of a section of an embodiment including a pilot valve and a main valve;
Figure 6a is a diagram of the exterior of a fuel level sensing device;
Figure 6b is a diagram of a side view of the exterior of a fuel level sensing device;
Figure 7a is a perspective view of a device embodying the present invention fitted to a tank positioned for entry to the tank;
Figure 7b is a perspective view of a device embodying the present invention fitted to a tank and in a working position;
Figure 8 is a circuit diagram of a digital resistor of invention embodiments;
Figure 9 is a cross sectional diagram of an integrated probe body with internal control circuitry and support means;
Figure 10 is a diagram of a top view of a shoulder portion of an embodiment of the present invention;
Figure 11a is an external view of a toroidal shaped 4-hole tank with which invention embodiments may be used;
Figure 11b is a cross-sectional diagram of a toroidal shaped 4-hole tank illustrating a mounting angle;
Figure 12a is an external view of a toroidal shaped single hole tank with a large manhole with which invention embodiments may be used;
Figure 12b is a cross-sectional diagram of a toroidal shaped single hole tank with a large manhole;
Figure 13a is an external view of a toroidal shaped single hole tank with a small manhole with which invention embodiments may be used;
Figure 13b is a cross-sectional diagram of a toroidal shaped single hole tank with a small manhole.

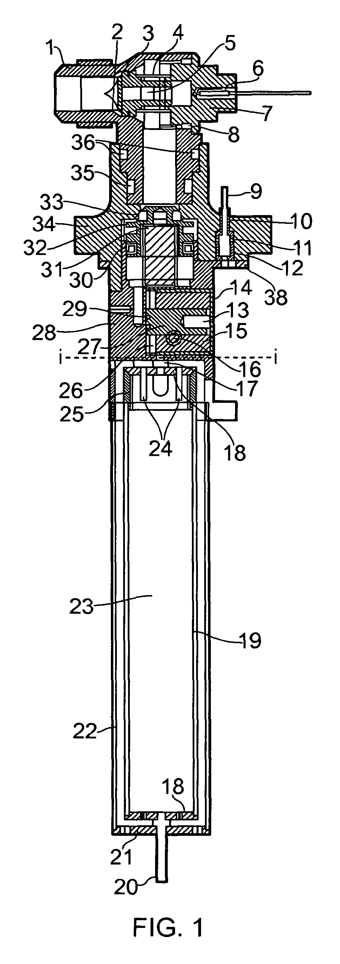

Figure 1 is a diagram of a fuel level sensing device. A fill nipple 1 surrounds a non-return valve 2. An O-ring seal 3 is provided behind the non-return valve 2. A spring 4 sits against the non-return valve 2, ensuring that the non-return valve is closed when there is no or insufficient incoming flow. In this embodiment the movable triggering portion is a magnet 5 attached to the non-return valve 2 so as to be movable. A reed switch 6, also referred to simply as an electrical switch, is provided behind the magnet 5. A sensor nut 7 surrounds the reed switch 6. A further O-ring seal 8 fits around the sensor nut 7. Another O-ring seal 35 provides sealing around a channel downstream of the non-return valve 2. There are five electrical feedthroughs 9, each with associated bottom isolators 10, top isolators 12, and O-ring seal 11, however only one set is depicted in Figure 1. A pilot valve 38 is provided below a main valve 32, the pilot valve 38 including a plunger 27, a coil 15, a coil housing 14, a coil housing end plate 26, and a spring 13. A further O-ring seal 29 is provided at one end of the plunger 27. A socket screw 16 is provided on either side of the pilot valve 38. An inner tube 19 and outer tube 22 are provided as an elongate level probe 40 or liquid level probe 40 having concentric conducting tubes, or elongate electrodes. An inner tube cap 18 fits to each of the top and the bottom of the inner tube 19, and a top spacer/isolator 17 isolates the upper of the two inner tube caps 18 from the adapter body 28 and the rest of the device. A bottom spacer/isolator 20 isolates the lower of the inner tuber caps 18 from the outer tube cap 21, and also isolates the bottom outer tube cap 21 from the tank wall. The bottom outer tube cap 21 fits to the bottom of the outer tube 22. Fuel can penetrate into the space between the inner tube 19 and outer tube 22 and into the space inside the inner tube 19. The control circuitry is provided as a PCB 23 in the space within the inner tube 19, onto which the reading circuitry and control circuitry can be printed. Soldering pins 24 are provided connecting to the upper of the inner tube caps 18. An inner tube top 25 is provided between the inner tube 19 and the upper of the inner tube caps 18. The main valve 32 is provided downstream of the non-return valve 2 and upstream of the pilot valve 38, and includes a spring 31. Sealing about the main valve 32 is provided by an O-ring 33 and a U-cup seal 30. The sensor nut 7, flange body 34, and adapter body 28 provide housing for the non-return valve 2, pilot valve 38, and main valve 32. In embodiments in which an integrated probe body including level probe and maximum fill level detecting part can be moved away from the rest of the device, components below the line i-i can be moved away, and an upper cap 37 of the outer tube 22 is provided.

When filling is commenced incoming fuel flows against the non-return valve 2, which is pushed inwards from its seat, moving the magnet 5 toward the electrical switch 6. The increased magnetic field closes or switches on the electrical switch 6, providing a fill signal to the connected control circuitry 23. If the electrical switch 6 is a reed switch, one end is connected to the sensor nut 7, so that the signal available to the other end of the reed switch 6 is a signal to ground. The connected control circuitry 23 includes the microcontroller 46 and supply voltage regulation 47. The main valve 32 is not directly operated by the control circuitry 23. Instead, a pilot valve 38 operates the main valve 32. The control circuitry 23 operates the coil 15 of the pilot valve 38, causing the plunger 27 to be pulled inwards against the plunger spring 13, thereby relieving closing pressure underneath the main valve 32, allowing the main valve 32 to be pushed down against the spring 31. When filling is underway, that is, the main valve 32 is open, the maximum fill sensor constantly monitors whether or not the maximum fill level has been reached. The maximum fill level is usually 80% for LPG tank embodiments, and is an upper limit beyond which the tank should not be filled. During filling, the maximum fill level is detected by the control circuitry 23 constantly monitoring the capacitance of a capacitor formed by the upper inner tube end plate 18 and the adapter body 28, or by a capacitor formed by the upper inner tube end plate 18 and the upper cap 37 of the outer tube 22. The capacitance changes when liquid enters between the capacitor plates, and the maximum fill level sensor determines that the maximum fill level has been reached. The second capacitor plate is formed by an upper cap 37 of the outer tube 22 in embodiments (to be discussed later) in which a liquid detecting part of the maximum fill sensor is provided as part of an integrated probe body which moves into a working or operating position away from the adapter body 28. When it is determined that the maximum fill level is reached, the pilot valve 38 is switched off: the plunger 27 is released, closing a relief opening 62 and causing pressure underneath the main valve 32, which is sealed by a U-cup seal 30, to rapidly increase through a small hole in the main valve 32. The main valve 32 is pushed upwards, closing off the fill opening. During normal operation, which in the case of embodiments used in a vehicle will be when the ignition is turned on, the level of LPG inside the tank is continuously monitored by the control circuitry 23. When the level probe of the liquid level sensor is in the working position, the liquid level within the level probe corresponds to the liquid level within the tank. The concentric inner tube 19 and outer tube 22 form two capacitor plates, and the capacitance is read by reading circuitry and converted into an output signal representing the liquid level in the tank by the control circuitry 23.

Each time the maximum fill level is reached, the reading circuitry takes a reading of the capacitance between the concentric inner tube 19 and outer tube 22 and stores this reading in memory as a calibration reference value. The capacitance between these two tubes is proportional to the liquid level, however a calibration is required to determine the proportionality relationship so that a capacitance value can be converted to a liquid level value. Since the calibration reference value corresponds to a maximum fill level, for example, 80%, other capacitance values can be converted to values corresponding to fill level by comparison with the calibration reference value. The effects of variations in fuel composition are eliminated. The output range of the output signal is rescaled between a minimum level value and the maximum level value.

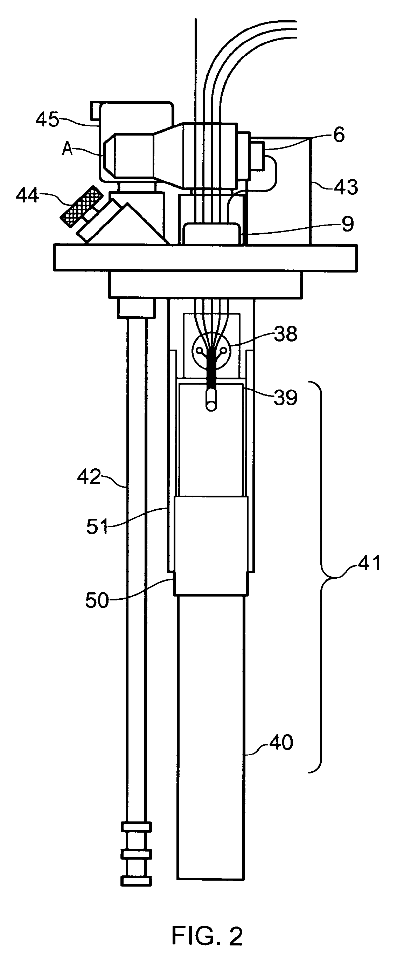

Figure 2 is a diagram of the outside of a fuel tank multivalve embodying the present invention. Feed valve functionality for providing fuel to an engine is provided by a take-off solenoid 45 connected to a take-off tube 42. Pressure relief functionality is provided by a pressure relief valve 43. A manual relief valve 44 could also be provided; this is a legal requirement in some jurisdictions. The position at which an incoming flow of fuel enters the device can be seen at A. The electrical switch 6 is connected to control circuitry 23 housed within the integrated probe body 41. The integrated probe body 41 is made up of external plates of the maximum fill level detecting part 39 and the level probe 40. The electrical feedthroughs 9, 10, 11, 12 are provided for sending and receiving signals to and from external systems, such as the ignition.

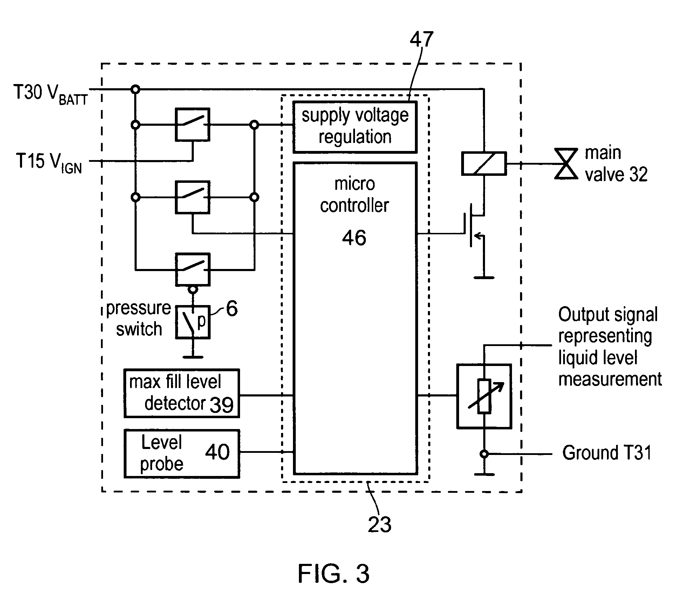

Figure 3 is a simplified diagram illustrating some operating principles of embodiments of the invention. There are input voltages from the battery T30 V_{BATT} and from the ignition T15 V_{IGN}. The supply voltage regulation 47 and microcontroller 46 compose the control circuitry 23. A system of switches is controlled by the control circuitry 23. An electrical switch 6 is a pressure switch which closes when there is a sufficient incoming flow of fuel. The main valve 32 is controlled by a pilot valve 38, and the microcontroller 46 constantly monitors whether or not the maximum (80%) fill level has been reached using the maximum fill level detecting part 39 whenever the main valve 32 is open. The supply voltage regulation part 47 switches to accepting a supply voltage T30 V_{BATT} from the battery when the electrical switch 6 closes to indicate filling. As soon as the maximum (80%) fill level has been reached, the microcontroller 46 closes the main valve 32 and powers down the associated parts of the control circuitry 23. In the event filling is interrupted before the maximum fill level is reached, the valve is closed and the associated parts of the control circuitry are powered down after a timer has run out. The control circuitry 23 provides a resistive output signal representing liquid level measurement while the ignition is on, indicated by a signal T15 V_{IGN}. The level probe 40 measures a value of an electrical property, and reading circuitry of the control circuitry reads the value. The microcontroller 46 converts the value to an output signal representing liquid level measurement via a digital resistor.

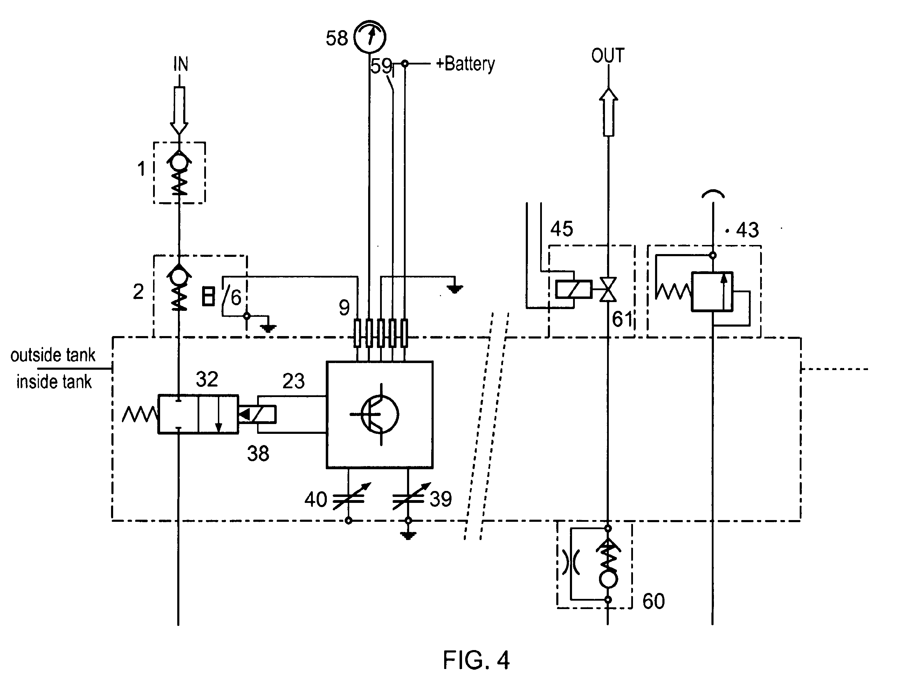

Figure 4 is a simplified schematic hydraulic/electric diagram. The inlet nipple 1 is shown as a spring-loaded non-return valve, immediately downstream is another spring-loaded non-return valve 2 with electrical switch 6. The electrical switch 6 connects to the control circuitry 23 inside the tank via a feedthrough 9. The main valve 32 is shown as a normally closed directional control valve, operated by a solenoid pilot valve 38. The control circuitry 23 is connected to the pilot valve 38, the level probe 40, the maximum fill detecting part 39, the electrical switch 6, an external level indicator 58, and a supply voltage circuit is formed with the ignition switch 59 and battery. The control circuitry 23 also has an earthed connection. The take-off solenoid 45, excess flow limiter valve 60, and pressure relief valve 43 are only provided in multivalve embodiments. Take-off solenoid 45 feeds fuel out from the tank to an engine, a shut off is provided between the take-off solenoid 45 and the outward flow. An excess flow limiter valve 60 limits flow out of the tank.

An incoming flow opens the inlet nipple (fill connector) 1 and non-return valve 2, closing the electrical switch 6 which turns on the parts of the control circuitry 23 necessary for filling, including constantly monitoring whether or not the maximum fill level has been reached using the maximum fill level detecting part 39. Closing the electrical switch 6 causes the control circuitry 23 to switch the pilot valve 38 to the on position relieving back hydraulic pressure against the main valve 32 and allowing the main valve 32 to open, and fuel to flow into the tank. Whilst the ignition switch 59 is on, reading circuitry of the control circuitry 23 can measure a value using level probe 40, and convert the value to an indication of the fuel level in the tank to send to a level indicator 58. Level sensing may occur constantly, or it may occur at discrete time intervals.

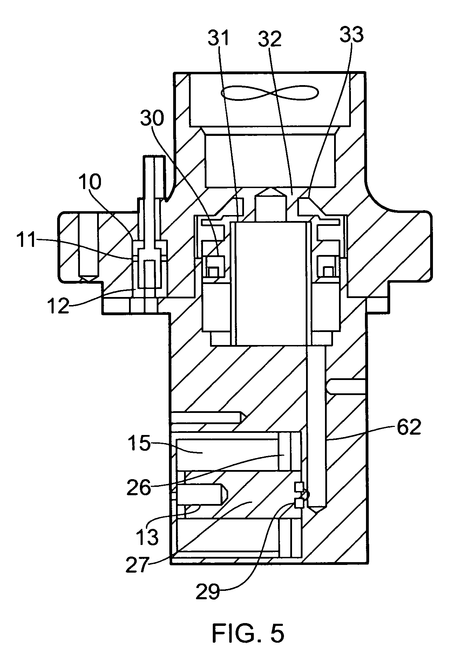

Figure 5 is a diagram representing a mid-section of an embodiment of the fuel sensing device. This section of the device is mounted to the tank so that anything above the line ii-ii is outside of the tank, and anything below the line ii-ii is within the tank. Individual components of the pilot valve 38 including the coil 15, coil housing end plate 26, spring 13, plunger 27 and sealing O-ring 29 are illustrated, along with the channel 62 that the pilot valve 38 allows to open during filling of the tank to relieve back pressure on the main valve 32 and to allow fuel to flow into the tank.

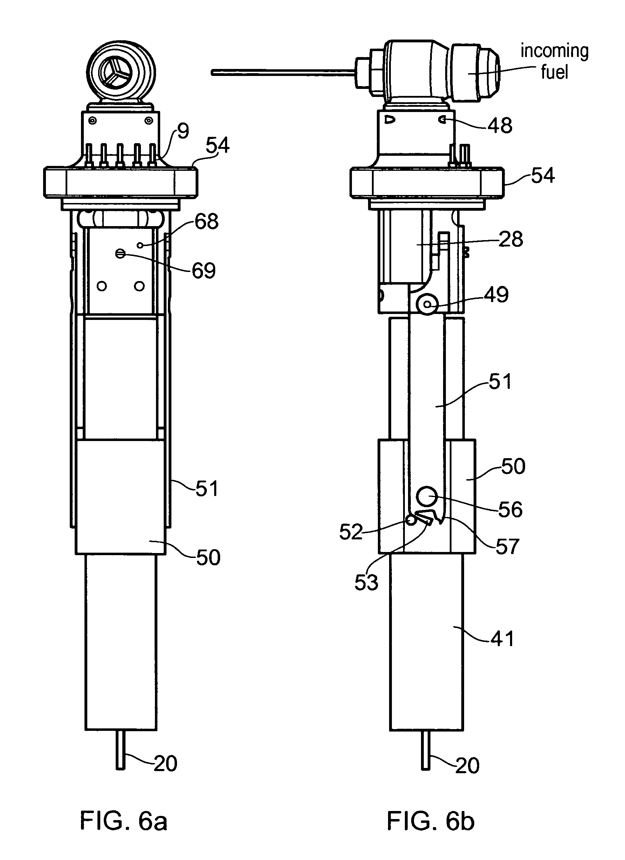

Figures 6a and 6b are diagrams of the exterior of an embodiment having an integrated probe body 41 operable to be rotated into a working position once mounted to a tank. The device is mounted to a tank by a screw through each corner of a shoulder portion 54. The five electrical feedthroughs 9 connect electronics such as control circuitry 23 inside the tank, to external components outside of the tank. An EMC (electromagnetic compatibility) board 68 is fixed in place with a fixing M2 screw 69. Arms 50 extend from a portion of the device which is not movable within the tank, to the integrated probe body 41 housing control circuitry 23 which can be rotated into the working position once inside the tank, then maintained in that position by the support means 55. The support means 55 comprise a sleeve 50 surrounding the integrated probe body 41, two arms 51, a locking stop 52 attached to the sleeve 50, a pin 56 attached to each side of the sleeve 50, a screw 49 to attach each arm to a non-movable portion, a sprung locking finger 53 and a locking hand 57 at one end of each arm 51. Once the integrated probe body 41 is within the tank, it can be wiggled or pushed into the working position. The integrated probe body 41 and sleeve 50 are rotatable about the pin 56. When rotated correctly, the sprung locking finger 53 is pushed towards the arm 51 by the locking stop 52 until the end of the locking finger 53 passes the locking stop 52 and springs back, in which position the locking stop 52 is held between the locking finger 53 and the locking hand 57. The support means are sufficiently strong to maintain the integrated probe body 41 in the working position during normal operation of the device, but not to prevent a user from returning the body to the entry position as illustrated in Figures 6a and 6b.

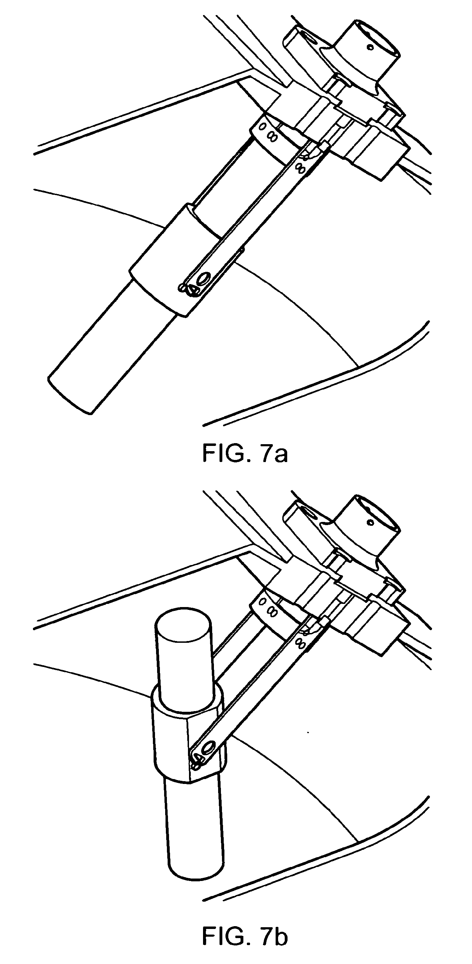

Figure 7a is a perspective view diagram of an embodiment in entry position, which is preferable for initially fitting the device to the tank. Figure 7b is a perspective view diagram of an embodiment with an integrated probe body 41 in a working position. In the working position illustrated, the bottom of the integrated probe body 41 is close to the bottom of the tank without affecting capacitance measurements.

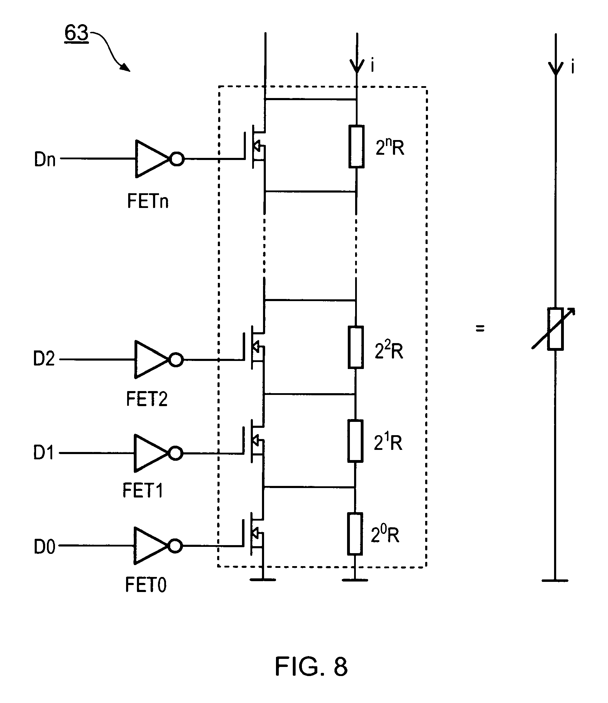

Figure 8 is a circuit diagram of a digital resistor 63 which is an example of signal output means, and may be included in control circuitry 23. The digital resistor 63 converts a signal representing a liquid level in the tank to a resistive output. The signal may be a binary signal, or it may be a signal whose amplitude corresponds to the liquid level in the tank. Each bit D0-Dn when low will cause the corresponding field effect transistor FET0-FETn to be closed, effectively shorting the connected resistor 2⁰R-2ⁿR. Each bit when high will cause the corresponding FET to be open, effectively putting the connected resistor in series with the connect gauge at i. The number of FETs open or closed is proportional to the liquid level in the tank.

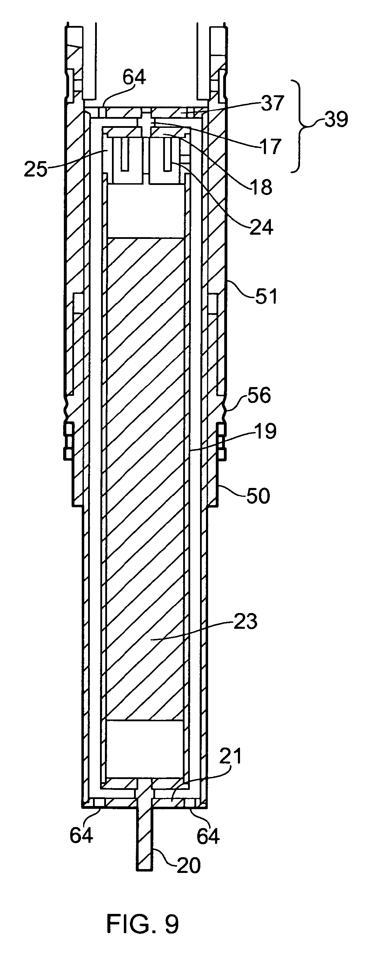

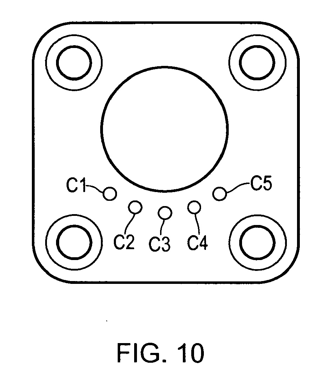

Figure 9 is a cross sectional diagram of an integrated probe body 40 and other components of invention embodiments. The control circuitry 23 is realised as a printed circuit board within the inner tube 19. Wired connections between the control circuitry and connected components are enabled via a hole (not illustrated) in the inner tube 19 and outer tube 22. The proximity of the control circuitry 23 to the plates 7, 17 of the capacitor of the maximum fill level detecting part 39 can be appreciated. Similarly, Figure 10 illustrates that the control circuitry 23 is directly adjacent to the plates inner tube 19, outer tube 22) of the level probe 40. The sleeve 50 is fixed to the outside of the outer tube 22 and, supported by the arms, the integrated probe body 41 and the components within it can rotate about the pin 56. Holes 64 in the lower 21 and upper 37 caps of the outer tube 22 allow fuel to flow in and out of the space between the inner tube 19 and outer tube 22 so that the level of the fuel between the plates is the same as the level of fuel in the tank. There are also holes (not illustrated) in the inner tube, which prevent the air which is present until a number of fills has taken place from getting trapped inside the inner tube. The bottom spacer/isolator 20 may be shortened when the device is fitted to a tank to enable the bottom cap of the outer tube 22 to be as close as possible to the bottom of the tank.

Figure 10 is a diagram of the top of a shoulder portion 54 of an embodiment, the bottom of which shoulder portion fits against the outside of the tank. A hole in each corner of the shoulder accepts a screw for attaching the device to the tank. Connections C1 to C5 correspond to electrical feedthroughs 9. In this embodiment, when properly fitted to a tank in a vehicle, C1 connects control circuitry 23 within the tank to a level indicator 58 outside of the tank. C2 connects control circuitry 23 within the tank to an electrical switch 6 outside of the tank. C3 connects control circuitry 23 within the tank to ground. C4 connects control circuitry 23 within the tank to ignition outside of the tank. C5 connects control circuitry 23 within the tank to a battery outside of the tank.

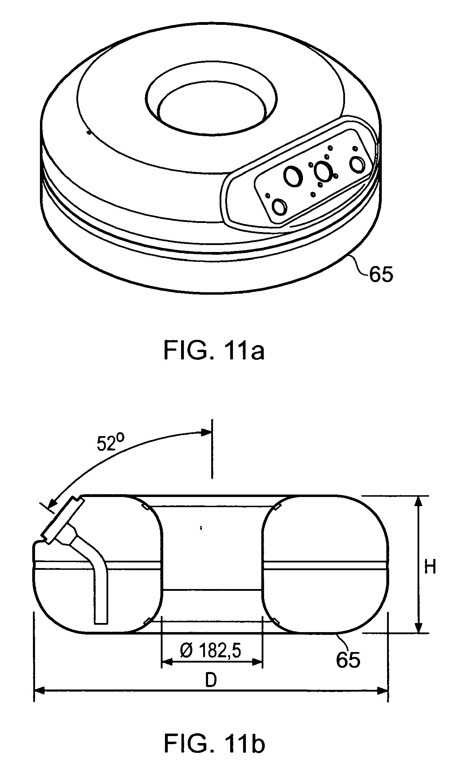

Figure 11 a illustrates the outside of a toroidal 4-hole tank 65. Figure 11b is a cross sectional diagram of a toroidal 4-hole tank. 4 holes are provided for fitting one of each of a fill valve with a maximum fill level shut off, a pressure relief valve, a fuel level sensor with external level sending unit, and a feed valve. The 52° mounting position of a device is illustrated, hence embodiments of the present invention are provided with an angled locking mounting bracket as support means. A sleeve 50 surrounding and fixed to the integrated probe body 41 is allowed to rotate through a 52° angle before locking into a working position in which the integrated probe body 41 is vertical. A fuel level sensing device embodying the present invention may be fitted to one hole of such a tank, in which case a blanking plate is used to cover another of the holes.

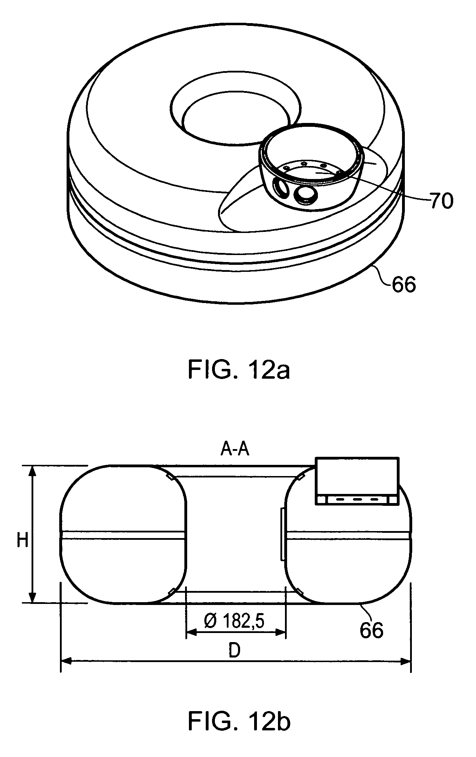

Figure 12a illustrates the outside of a toroidal single hole tank 66 with a large manhole 70. Manhole 70 in this document is taken to mean the access hole to the tank for valves and other connecting apparatus. Multivalve embodiments of the present invention which include a pressure relief valve 43 and take-off solenoid 45 can fit to a single hole tank, possibly using a fitting plate over the large manhole 70. A fuel level sensing device embodying the present invention can also fit to a toroidal single hole tank 66 with a large manhole, but with a three hole mounting plate fitted to accommodate separate feed and pressure relief valves. Figure 12b is a cross-sectional diagram of a toroidal single hole tank with large manhole 66. Embodiments of the present invention fitted to such a tank would not require an angled mounting bracket since the entry position of the device to the tank would correspond to the working position. The integrated probe body 41 would be substantially vertical on entry to the tank 66.

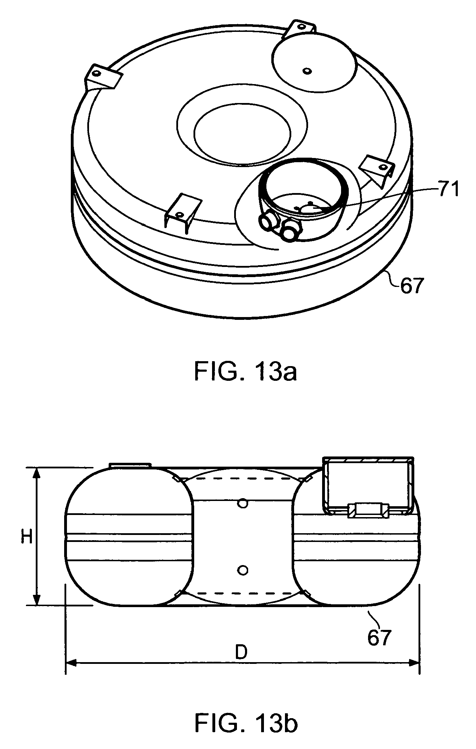

Figure 13a is a view of the exterior of a single hole tank 67 with a small manhole 71. A multivalve embodying the present invention can be fitted to such a tank. Figure 13b is a cross-sectional view which, similarly to the single hole tank 66 with large manhole 70, illustrates that a device fitting to the tank 67 would not require an angled mounting bracket.

## Claims

1. A multivalve for mounting to a fuel tank (65, 66, 67), the multivalve having a feed valve operable to feed fuel out of the tank and a fuel level sensing device, the fuel level sensing device comprising:
a liquid level sensor (40) that is situated in the tank (65, 66, 67)when in use and is operable to make level measurements based on capacitance, the fuel level sensing device also including a separate maximum fill sensor (39) being situated in the tank (65, 66, 67) when in use and being operable to sense that a predetermined maximum fill level has been reached based on measurements of capacitance, wherein
the position of each part of the fuel level sensing device is independent of the liquid level in the tank (65, 66, 67).

2. A multivalve according to any of the preceding claims, wherein the multivalve also includes a fill shut-off mechanism having a main valve (32) and a pilot valve (38), in which
the pilot valve (38) is switched on to fill the tank (65, 66, 67), moving in one direction to relieve back pressure and allow the main valve to open; and in which
when it is determined that the maximum fill level has been reached, the fill shut off mechanism is operable to switch off the pilot valve (38) so that it moves in the opposite direction to cause back pressure to shut the main valve (32) and prevent fuel from entering the tank (65, 66, 67).

3. A multivalve according to any of the preceding claims, further comprising:
an electrical switch (6), and a non-return valve (2) having a movable triggering portion (5), wherein:
the triggering portion (5) is operable, when an incoming flow of fuel against the non-return valve (2) reaches a sufficient level, to move towards and trigger the electrical switch (6); and
the electrical switch (6)is operable, when triggered, to switch on a pilot valve (38) which moves in a direction so as to relieve back pressure and allow a main valve (32) to open and fuel to enter the tank (65, 66, 67).

4. A multivalve according to any of the preceding claims, wherein:
the fuel level sensing device comprises first and second portions which can be moved between a mounting orientation and a working orientation in which the second portion is rotated and/or translated relative to the first portion;
and also comprising locking means (52, 53) being provided to lock the fuel level sensing device in the working orientation.

5. A multivalve according to claim 4, wherein the locking means (52, 53) is releasable to allow the fuel level sensing device to be moved from the working orientation to the mounting orientation for removal from the fuel tank (65, 66, 67).

6. A multivalve according to claim 4 or 5, in which, in the mounting orientation, the first and second portions are substantially aligned.

7. A multivalve according to any of the preceding claims, wherein
the liquid level sensor includes an elongate level probe (19, 22) extending into the fuel tank (65, 66, 67),
the maximum fill detector (39) is fixedly attached to the upper end of the level probe (19, 22) in use so that when the level probe (19, 22) is in its working position, the maximum fill detector (39) is in its operating position, and the external faces of the maximum fill detector (39) and level probe (19, 22) together form an integrated probe body (41).

8. A multivalve according to any of the preceding claims, further comprising:
control circuitry (23) operable to generate a liquid level measurement corresponding to a value of capacitance measured by the level probe (19, 22) and representing the liquid level in the tank (65, 66, 67); and
signal output means (63) operable to provide an output signal representing the liquid level measurement; wherein
the liquid level measurement is provided in dependence upon the value of capacitance measured by the level probe (19, 22) and a calibration reference value.

9. A multivalve according to any of the preceding claims, wherein the liquid level sensor includes control circuitry (23) comprising:
measurement generation means operable to convert a value of capacitance measured by the liquid level sensor into a liquid level measurement based on a calibration reference value; and
signal output means (63) operable to provide an output signal representing the liquid level measurement.

10. A multivalve according to claim 8 or 9, wherein the signal output means is a digital resistor (63), and the output signal can be one, either, or both of a PWM signal and an electronic resistive output.

11. A multivalve according to any of the preceding claims, wherein the maximum fill sensor includes control circuitry (23) comprising:
maximum fill determination means, operable to convert a value of capacitance measured by the maximum fill sensor (39) into a determination of whether a maximum fill level has been reached;
a fill shut off mechanism operable to switch off a pilot valve (38) when it is determined that the maximum fill level has been reached;
calibration reference value obtaining means operable to obtain a contemporaneous value of capacitance from the liquid level sensor (40) when it is determined that the maximum fill level has been reached; and
storage means for storing the obtained value as the calibration reference value.

12. A multivalve according to any of claims 8 to 11, wherein the control circuitry (23) is housed within the level probe (19, 22) or the integrated probe body (41).

13. A multivalve according to any of the preceding claims, wherein
in use, the liquid level sensor (40) and the maximum fill sensor (39) are housed entirely within the volume of the tank (65, 66, 67).

14. A fuel tank incorporating a fuel tank multivalve according to any of the preceding claims.

## Patentansprüche

1. Mehrfachventil zur Befestigung an einem Kraftstofftank (65, 66, 67), wobei das Mehrfachventil ein Versorgungsventil zur Beförderung von Kraftstoff aus dem Tank sowie eine Vorrichtung zum Erfassen des Kraftstoffstands aufweist, welche folgendes umfasst:
einen Füllstandssensor (40), der sich bei Gebrauch im Tank (65, 66, 67) befindet und der Füllstandsmessungen auf der Basis der Kapazität vornimmt, wobei die Vorrichtung zum Erfassen des Kraftstoffstands auch einen gesonderten Höchstfüllstandssensor (39) aufweist, der sich bei Gebrauch im Tank (65, 66, 67) befindet und der auf der Basis von Kapazitätsmessungen erfasst, dass ein festgelegter Höchstfüllstand erreicht wurde, wobei
die Position jedes Teils der Vorrichtung zum Erfassen des Kraftstoffstands vom Füllstand im Tank (65, 66, 67) unabhängig ist.

2. Mehrfachventil nach einem der vorhergehenden Ansprüche, wobei das Mehrfachventil auch einen Mechanismus zum Abschalten der Befüllung mit einem Hauptventil (32) und einem Pilotventil (38) aufweist, wobei
das Pilotventil (38) zur Befüllung des Tanks (65, 66, 67) angeschaltet wird, in einer Richtung bewegt wird, so dass der Staudruck nachlässt und sich das Hauptventil öffnen kann; und wobei
bei der Bestimmung, dass der Höchstfüllstand erreicht wurde, der Mechanismus zum Abschalten der Befüllung das Pilotventil (38) abschaltet, so dass es sich in entgegengesetzter Richtung bewegt, und so der Staudruck veranlasst, dass sich das Hauptventil (32) schließt und es verhindert, dass Kraftstoff in den Tank (65, 66, 67) eintritt.

3. Mehrfachventil nach einem der vorhergehenden Ansprüche, zudem umfassend:
einen elektrischen Schalter (6) und ein Rückschlagventil (2) mit einem beweglichen Triggerteil (5), wobei:
wenn der gegen das Rückschlagventil (2) einströmende Kraftstoffstrom einen ausreichenden Füllstand erreicht, der Triggerteil (5) zum elektrischen Schalter (6) bewegt wird und er diesen triggert; und
der elektrische Schalter (6) bei Triggerung ein Pilotventil (38) anschaltet, das sich in einer Richtung bewegt, so dass der Staudruck nachlässt und es ermöglicht, dass sich ein Hauptventil (32) öffnet und Kraftstoff in den Tank (65, 66, 67) tritt.

4. Mehrfachventil nach einem der vorhergehenden Ansprüche, wobei:
die Vorrichtung zum Erfassen des Kraftstoffstands erste und zweite Teile aufweist, die zwischen einer Montageausrichtung und einer Arbeitsausrichtung bewegt werden können, in der der zweite Teil in Bezug auf den ersten Teil gedreht und/oder versetzt wird;
sowie auch Arretiereinrichtungen (52, 53) aufweist, die die Vorrichtung zum Erfassen des Kraftstoffstands in der Arbeitsausrichtung arretieren.

5. Mehrfachventil nach Anspruch 4, wobei die Arretiereinrichtungen (52, 53) lösbar sind, damit die Vorrichtung zum Erfassen des Kraftstoffstands aus der Arbeitsausrichtung in die Montageausrichtung bewegt und vom Kraftstofftank (65, 66, 67) entfernt werden kann.

6. Mehrfachventil nach Anspruch 4 oder 5, wobei die ersten und zweiten Teile in der Montageausrichtung im Wesentlichen gefluchtet sind.

7. Mehrfachventil nach einem der vorhergehenden Ansprüche, wobei
der Füllstandssensor eine in den Kraftstofftank (65, 66, 67) ragende längliche Füllstandssonde (19, 22) aufweist,
der Höchstfüllstandsdetektor (39) bei Gebrauch fest am oberen Ende der Füllstandssonde (19, 22) angebracht ist, so dass sich der Höchstfüllstandsdetektor (39) in seiner Arbeitsposition befindet, und die Außenseiten des Höchstfüllstandsdetektors (39) und der Füllstandssonde (19, 22) zusammen einen integrierten Sondenkörper (41) ausmachen, wenn sich die Füllstandssonde (19, 22) in ihrer Arbeitsposition befindet.

8. Mehrfachventil nach einem der vorhergehenden Ansprüche, zudem umfassend:
eine Steuerschaltung (23), die eine Füllstandsmessung vornimmt, die einem von der Füllstandssonde (19, 22) gemessenen Kapazitätswert entspricht, und die den Flüssigkeitsstand im Tank (65, 66, 67) darstellt; und
eine Signalausgangseinrichtung (63), die ein Ausgangssignal bereitstellt, das die Füllstandsmessung veranschaulicht; wobei
die Füllstandsmessung je nach dem von der Füllstandssonde (19, 22) gemessenen Kapazitätswert und einem Kalibrierungsreferenzwert bereitgestellt wird.

9. Mehrfachventil nach einem der vorhergehenden Ansprüche, wobei der Füllstandssensor eine Steuerschaltung (23) aufweist, umfassend:
Messerzeugungseinrichtungen, die einen vom Füllstandssensor gemessenen Kapazitätswert auf der Basis eines Kalibrierungsreferenzwerts in eine Füllstandsmessung umwandeln; und
Signalausgangseinrichtungen (63), die ein Ausgangssignal bereitstellen, das die Füllstandsmessung veranschaulicht.

10. Mehrfachventil nach Anspruch 8 oder 9, wobei die Signalausgangseinrichtung ein digitaler Widerstand (63) ist, und das Ausgangssignal eines von einem PWM-Signal und einem elektronischem Widerstandsausgang oder beide sein kann.

11. Mehrfachventil nach einem der vorhergehenden Ansprüche, wobei der Höchstfüllstandssensor eine Steuerschaltung (23) aufweist, umfassend:
Einrichtungen zur Bestimmung des Höchstfüllstands, die einen vom Höchstfüllstandssensor (39) gemessenen Kapazitätswert in eine Bestimmung, ob ein Höchstfüllstand erreicht wurde, umwandelt;
ein Mechanismus zum Abschalten der Befüllung, der ein Pilotventil (38) abschaltet, wenn es bestimmt wurde, dass der Höchstfüllstand erreicht wurde;
Einrichtungen zum Gewinnen des Kalibrierungsreferenzwertes, die einen zeitgleichen Kapazitätswert aus dem Füllstandssensor (40) erhalten, wenn es bestimmt wird, dass der Höchstfüllstand erreicht wurde; und
Speichereinrichtungen zum Speichern des erhaltenen Werts als Kalibrierungsreferenzwert.

12. Mehrfachventil nach einem der Ansprüche 8 bis 11, wobei die Steuerschaltung (23) in der Füllstandssonde (19, 22) oder in dem integrierten Sondenkörper (41) untergebracht ist.

13. Mehrfachventil nach einem der vorhergehenden Ansprüche, wobei der Füllstandssensor (40) und der Höchstfüllstandssensor (39) bei Gebrauch ganz im Volumen des Tanks (65, 66, 67) untergebracht sind.

14. Kraftstofftank, der ein Kraftstofftank-Mehrfachventil nach einem der vorhergehenden Ansprüche birgt.

## Revendications

1. Multivanne pour l'installation dans une cuve de combustible (65, 66, 67), la multivanne comportant une vanne d'amenée apte à amener le combustible de la cuve et un dispositif de détection du niveau du combustible, le dispositif de détection du niveau du combustible comprenant :
un capteur de niveau de liquide (40) qui est situé dans la cuve (65, 66, 67) lors de l'utilisation, et qui est apte à faire des mesures de niveau basées sur la capacité, le dispositif de détection de niveau de combustible comprenant également un capteur de remplissage maximal séparé (39) situé dans la cuve (65, 66, 67) lors de l'utilisation, et apte à détecter qu'un niveau de remplissage maximal prédéterminé a été atteint sur la base des mesures de la capacité, où
la position de chaque partie du dispositif de détection du niveau du carburant est indépendante du niveau de liquide dans la cuve (65, 66, 67).

2. Multivanne selon la revendication précédente, dans laquelle la multivanne comprend également un mécanisme d'arrêt de remplissage comportant une vanne principale (32) et une vanne pilote (38), dans laquelle
la vanne pilote (38) est commutée à l'état passant pour remplir la cuve (65, 66, 67), en se déplaçant dans une direction pour atténuer la contre-pression et pour permettre à la vanne principale de s'ouvrir ; et dans laquelle
lorsqu'il est établi que le niveau de remplissage maximal a été atteint, le mécanisme d'arrêt de remplissage est apte à rendre non passante la vanne pilote (38) de sorte qu'elle se déplace dans la direction opposée pour amener la contre-pression à fermer la vanne principale (32) et à empêcher que le combustible d'entrer dans la cuve (65, 66, 67).

3. Multivanne selon l'une quelconque des revendications précédentes, comprenant en outre :
un commutateur électrique (6) et une vanne de non-retour (2) comportant une portion de déclenchement mobile (5), où :
la portion de déclenchement (5) est apte, lorsqu'elle est déclenchée, à rendre passante une vanne pilote (38) qui se déplace dans une direction de manière à atténuer la contre-pression et à permettre à une vanne principale (32) de s'ouvrir et au combustible d'entrer dans la cuve (65, 66, 67).

4. Multivanne selon l'une quelconque des revendications précédentes, dans laquelle :
le dispositif de détection du niveau du combustible comprend des première et seconde portions qui peuvent être déplacées entre une orientation de montage et une orientation de travail, dans laquelle la seconde portion est amenée à tourner et/ou à translater relativement à la première portion ;
et comprenant également un moyen de verrouillage (52, 53) qui est réalisé pour verrouiller le dispositif de détection du niveau du carburant dans l'orientation de travail.

5. Multivanne selon la revendication 4, dans laquelle le moyen de verrouillage (52, 53) peut être relâché pour permettre le déplacement du dispositif de détection du niveau du combustible de l'orientation de travail à l'orientation de montage pour le retrait de la cuve de combustible (65, 66, 67).

6. Multivanne selon la revendication 4 ou 5, dans laquelle, dans l'orientation de montage, les première et seconde portions sont sensiblement alignées.

7. Multivanne selon l'une quelconque des revendications précédentes, dans laquelle
le capteur du niveau du liquide comprend une sonde de niveau allongée (19, 22) s'étendant dans la cuve de combustible (65, 66, 67),
le détecteur de remplissage maximal (39) est attaché fixement à l'extrémité supérieure de la sonde de niveau (19, 22) en cours d'utilisation de telle sorte que lorsque la sonde de niveau (19, 22) se trouve dans sa position de travail, le détecteur de remplissage maximal (39) se trouve dans sa position de fonctionnement, et les faces externes du détecteur de remplissage maximal (39) et de la sonde de niveau (19, 22) forment ensemble un corps de sonde intégré (41).

8. Multivanne selon l'une quelconque des revendications précédentes, comprenant en outre :
un circuit de commande (23) apte à produire une mesure de niveau du liquide correspondant à une valeur de capacité mesurée par la sonde de niveau (19, 22) et représentant le niveau du liquide dans la cuve (65, 66, 67) ; et
un moyen de sortie de signaux (63) apte à fournir un signal de sortie représentant la mesure du niveau du liquide ; où
la mesure du niveau du liquide est obtenue en fonction de la valeur de la capacité mesurée par la sonde de niveau (19, 22) et une valeur de référence d'étalonnage.

9. Multivanne selon l'une quelconque des revendications précédentes, dans laquelle le capteur du niveau du liquide comprend un circuit de commande (23) comprenant :
un moyen de génération de mesure apte à convertir une valeur de la capacité mesurée par le capteur du niveau du liquide en une mesure du niveau du liquide sur la base d'une valeur de référence d'étalonnage ; et
un moyen de sortie de signaux (63) apte à fournir un signal de sortie représentant la mesure du niveau du liquide.

10. Multivanne selon la revendication 8 ou 9, dans laquelle le moyen de sortie de signaux est une résistance numérique (63), et le signal de sortie peut être un, l'un des ou les deux d'un signal PWM et d'une sortie résistive électronique.

11. Multivanne selon l'une quelconque des revendications précédentes, dans laquelle le capteur de remplissage maximal comprend un circuit de commande (23) comprenant :
un moyen de détermination de remplissage maximal, apte à convertir une valeur de la capacité mesurée par le capteur de remplissage maximal (39) en une détermination de ce qu'un niveau de remplissage maximum a été atteint ;
un mécanisme d'arrêt de remplissage apte à rendre non passante une vanne pilote (38) lorsqu'il est établi que le niveau de remplissage maximum a été atteint ;
un moyen d'obtention d'une valeur de référence d'étalonnage apte à obtenir une valeur de capacité concomitante du capteur du niveau du liquide (40) lorsqu'il est établi que le niveau de remplissage maximal a été atteint ; et
un moyen de stockage pour stocker la valeur obtenue en tant que valeur de référence d'étalonnage.

12. Multivanne selon l'une quelconque des revendications 8 à 11, dans laquelle le circuit de commande (23) est logé dans la sonde de niveau (19, 22) ou dans le corps de sonde intégré (41).

13. Multivanne selon l'une quelconque des revendications précédentes, dans laquelle, en cours d'utilisation, le capteur du niveau du liquide (40) et le capteur de remplissage maximum (39) sont logés entièrement dans le volume de la cuve (65, 66, 67).

14. Cuve de combustible incorporant une multivanne de cuve de combustible selon l'une quelconque des revendications précédentes.
